(19)

**Europäisches Patentamt**
**European Patent Office**
**Office européen des brevets**

(11) **EP 4 571 887 A1**

(12) **EUROPEAN PATENT APPLICATION**

(43) Date of publication:
**18.06.2025 Bulletin 2025/25**

(21) Application number: **24219248.2**

(22) Date of filing: **11.12.2024**

(51) International Patent Classification (IPC):
*H01M 4/587* (2010.01)    *H01M 4/04* (2006.01)
*H01M 4/133* (2010.01)    *H01M 4/134* (2010.01)
*H01M 4/1393* (2010.01)    *H01M 4/1395* (2010.01)
*H01M 4/36* (2006.01)    *H01M 4/38* (2006.01)
*H01M 4/62* (2006.01)

(52) Cooperative Patent Classification (CPC):
**H01M 4/587; H01M 4/0404; H01M 4/133;**
**H01M 4/134; H01M 4/1393; H01M 4/1395;**
**H01M 4/364; H01M 4/386; H01M 4/625;**
H01M 10/0525; H01M 2004/021; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.12.2023 KR 20230181329**

(71) Applicant: **SK On Co., Ltd.**
**Seoul 03161 (KR)**

(72) Inventors:
• **JEON, Chan Young**
**Daejeon 34124 (KR)**
• **JIN, Bo Gyeong**
**Daejeon 34124 (KR)**

(74) Representative: **Stolmár & Partner**
**Patentanwälte PartG mbB**
**Blumenstraße 17**
**80331 München (DE)**

(54) **NEGATIVE ELECTRODE ACTIVE MATERIAL FOR LITHIUM SECONDARY BATTERY**

(57)    The present disclosure relates to a negative electrode active material including a carbon-based material and a silicon-based material, and as the carbon-based material has a characteristic of controlling a viscosity of a slurry, excellent electrode coating quality may be implemented. A lithium secondary battery including the negative electrode active material of the present disclosure may have high-capacity characteristics, may effectively prevent electrical isolation and peeling phenomena caused by volume expansion of silicon, and may implement excellent lifespan characteristics at a low temperature.

EP 4 571 887 A1

# EP 4 571 887 A1

**Description**

## CROSS-REFERENCE TO RELATED APPLICATIONS

This application claims priority under 35 U.S.C. §119 to Korean Patent Application No. 10-2023-0181329, filed on December 14, 2023, in the Korean Intellectual Property Office, the disclosure of which is incorporated herein by reference in its entirety.

## TECHNICAL FIELD

The following disclosure relates to a negative electrode active material for a lithium secondary battery, and a negative electrode and a lithium secondary battery including the same.

## BACKGROUND

In a lithium secondary battery, a negative electrode material stores and releases lithium ions from a positive electrode, allowing a current to flow through an external circuit. During charging, lithium ions move from the positive electrode to the negative electrode and enter between layers of graphite, which is a negative electrode material, causing the graphite to expand and increase in volume. That is, the expansion of graphite causes a structural change over time, which causes a decrease in capacity of the battery. Recently, the battery industry has been actively developing next-generation negative electrode materials to meet the needs of the times for high-capacity batteries.

Currently, as the negative electrode material, graphite that is stacked in a regular layered structure is mainly used, and graphite is largely divided into natural graphite and artificial graphite. Natural graphite is the most stable and inexpensive material for storing lithium ions, but its structural stability is gradually decreasing due to expansion problems during use, and a proportion of artificial graphite used to prevent this problem is gradually increasing. Artificial graphite is formed through a high-temperature heat treatment at 3,000°C or higher and thus has a higher crystallinity and a more uniform structure than natural graphite, making it more stable. However, the price is high due to additional manufacturing processes such as processing of petroleum-based pitch or coal tar raw materials to manufacture needle coke, crushing of the needle coke, and then lumping and heating the crushed needle coke.

Meanwhile, a silicon negative electrode material is attracting attention as a next-generation material because it has a higher capacity and higher output than a graphite-based negative electrode material. Since graphite stores one lithium ion per six carbon atoms, whereas silicon has a structure in which 15 lithium ions are stored per four atoms, a unit energy capacity of a silicon-based negative electrode material is about 10 times higher than that of graphite. However, in the case of the silicon negative electrode material, when charging and discharging are repeated, the volume easily expands, and thus, the charge and discharge efficiency is reduced. In order to solve the volume expansion problem of the silicon negative electrode material, the silicon negative electrode material is used in the form of being added in an amount of 4 to 5% to the graphite-based negative electrode material.

## SUMMARY

An embodiment of the present disclosure is directed to providing a negative electrode active material that may prevent an increase in slurry viscosity in a negative electrode manufacture process and may implement excellent electrode coating quality.

Another embodiment of the present disclosure is directed to providing a negative electrode having a high capacity and a long-term lifespan characteristic due to alleviation of volume expansion caused by charge and discharge of a secondary battery.

Still another embodiment of the present disclosure is directed to providing a lithium secondary battery including the negative electrode having the above advantages. The lithium secondary battery may be widely applied in an electric vehicle, a battery charging station, and other green technology fields such as solar power generation and wind power generation using batteries.

In one general aspect, a negative electrode active material includes a carbon-based material and a silicon-based material that satisfy the following Expression 1:

[Expression 1]

$$0.9 \leq D_{A50}/D_{B50} \leq 1.1$$

wherein $D_{A50}$ and $D_{B50}$ are 50th percentiles of a volume-weighted distribution of diameters of the carbon-based material measured by a two-dimensional perspective and a laser diffraction method, respectively.

In the negative electrode active material according to an exemplary embodiment, the carbon-based material may be artificial graphite or natural graphite.

In the negative electrode active material according to an exemplary embodiment, the carbon-based material may be coated with pitch carbon, soft carbon, hard carbon, heavy oil, phenols, mesophase pitch carbide, calcined coke, carbon fibers, or a mixture thereof.

In the negative electrode active material according to an exemplary embodiment, the silicon-based material may be selected from the group consisting of Si, $SiO_x$ (0 < x < 2), metal-doped $SiO_x$ (0 < x < 2), and a silicon-carbon composite.

In the negative electrode active material according to an exemplary embodiment, the silicon-based material may be included in an amount of 0.5 to 30 parts by weight with respect to 100 parts by weight of the carbon-based material.

In another general aspect, a method of manufacturing a negative electrode includes a coating process of depositing a negative electrode active material slurry including the negative electrode active material according to an exemplary embodiment of the present disclosure and a conductive agent on a current collector, and then drying the negative electrode active material slurry.

In the method of manufacturing a negative electrode according to an exemplary embodiment, the conductive agent may be carbon nanotubes.

In the method of manufacturing a negative electrode according to an exemplary embodiment, a viscosity of the negative electrode active material slurry may be 2,000 to 10,000 cP.

In the method of manufacturing a negative electrode according to an exemplary embodiment, the amount of solid content in the negative electrode active material slurry may be 10 to 70 parts by weight with respect to 100 parts by weight of a total weight of the negative electrode active material slurry.

In the method of manufacturing a negative electrode according to an exemplary embodiment, a die pressure in the coating process may be 0.05 to 20 psi.

In the method of manufacturing a negative electrode according to an exemplary embodiment, the negative electrode active material slurry may further include carboxymethyl cellulose (CMC), styrene butadiene rubber (SBR), or a mixture thereof.

In still another general aspect, a lithium secondary battery includes a positive electrode; a negative electrode manufactured by the method of manufacturing a negative electrode of the present disclosure; and a separator disposed between the positive electrode and the negative electrode.

Other features and aspects will be apparent from the following detailed description, the drawings, and the claims.

## DETAILED DESCRIPTION OF EMBODIMENTS

Hereinafter, the present disclosure will be described in detail. However, this is only illustrative, and the present disclosure is not limited to specific exemplary embodiments which are illustratively described by the present disclosure. Unless otherwise defined, the terms used in the present specification should be interpreted as generally understood by those skilled in the art to which the present disclosure pertains.

Unless the context clearly indicates otherwise, singular forms used in the present specification may be intended to include plural forms.

In addition, a numerical range used in the present specification includes upper and lower limits and all values within these limits, increments logically derived from a form and span of a defined range, all double limited values, and all possible combinations of the upper and lower limits in the numerical range defined in different forms. Unless otherwise specifically defined in the specification of the present disclosure, values out of the numerical range that may occur due to experimental errors or rounded values also fall within the defined numerical range.

The terms "comprise(s)", "include(s)", "have (has)", and the like used in the present specification indicate the presence of features or components described in the specification, and do not preclude the addition of one or more other features or components, unless specifically limited.

As a demand for medium and large-sized secondary batteries, such as a secondary battery for an electric vehicle (EV) and a secondary battery for an energy storage system (ESS), is expected to surge, a need for development of high-capacity secondary batteries has increased. As part of this, in order to commercialize silicon-based composite negative electrode materials exhibiting high-capacity characteristics, there is a need for development of a technology that may solve the problem of deterioration of electrode coating quality caused by a conductive agent added to alleviate volume expansion resulting from charging and discharging of secondary batteries.

A negative electrode active material of the present disclosure may control a viscosity of a slurry and the amount of solid content in manufacturing a negative electrode, and accordingly, electrode fracture may be prevented and adhesive strength between active materials may be improved. As a result, electrical isolation and peeling phenomena caused by volume expansion of silicon that occurs during charging and discharging of a secondary battery may be suppressed, and lifespan characteristics and charging and discharging characteristics at a low temperature may be improved.

Specifically, the present disclosure provides a negative electrode active material including a carbon-based material and a silicon-based material that satisfy the following Expression 1:

$$[\text{Expression 1}]$$

$$0.9 \leq D_{A50}/D_{B50} \leq 1.1$$

wherein $D_{A50}$ and $D_{B50}$ are 50th percentiles of a volume-weighted distribution of diameters of the carbon-based material measured by a two-dimensional perspective and a laser diffraction method, respectively.

In the above expression, when $D_{A50}/D_{B50}$ is in a range of 0.9 or more and 1.1 or less, the carbon-based material may achieve excellent sphericity, and specifically, $D_{A50}/D_{B50}$ may satisfy $0.9 < D_{A50}/D_{B50} < 1.1$. In this case, as the negative electrode active material has the characteristic of not excessively increasing a viscosity of a slurry, the viscosity may be lowered without changing the amount of solid content in the slurry, which is not only advantageous for electrode coating, but also improves lifespan characteristics and low-temperature performance.

Meanwhile, when the $D_{A50}/D_{B50}$ value is less than 0.9 or greater than 1.1, the slurry formed in the electrode negative coating is not formed uniformly, and the surface tension decreases due to a decrease in the amount of solid content in the slurry, which may cause the formation of an uneven coating layer. In addition, during a coating layer drying process, a large volume change may occur as a large amount of solvent escapes from the coating layer, which may cause electrode fracture and a decrease in adhesive strength between active materials.

$D_{A50}$ of the particles may be measured using a particle shape analyzer. Specifically, a two-dimensional (2D) image of the particles may be captured using a particle shape analyzer, and diameters of the particles analyzed using the captured two-dimensional image may be measured.

For example, $D_{A50}$ of the particles may be a value obtained by measuring diameters of the particles of approximately 10,000 two-dimensional images captured using an image analysis program and then calculating the 50th percentile thereof.

For example, $D_{A50}$ of the particles may be measured by dispersing particle specimens, observing the particle specimens with a high-resolution image sensor of a particle shape analyzer, and capturing and analyzing two-dimensional images of the particles. Alternatively, the diameters of the particles may be measured by preparing a solution obtained by mixing the particles with water or an ethanol solvent, and then capturing and analyzing two-dimensional images of secondary particles dispersed in the solvent using a dynamic camera.

The specimens may be prepared by dropping 1 mm$^3$ of the particle samples onto a glass sample plate and then dispersing the particle samples by applying an air pressure of 3 bar. Alternatively, for example, the specimens may be prepared by dispersing a mixture obtained by mixing 1 mm$^3$ of the particle samples with an ethanol solvent, and then inserting the mixture between two glass sample plates.

For example, Mastersizer, Morphologi G3, or Morphologi 4 available from Malvern Panalytical Ltd., Sync or Camsizer-X2 available from Microtrac Retsch GmbH, or the like may be used as the particle shape analyzer.

In the case of the laser diffraction method, particle diameters from a submicron range to several millimeters may be measured, and results with high reproducibility and high resolution may be obtained. Specifically, a carbon-based material powder may be dispersed in a dispersion medium, and then, the dispersion medium is introduced into a commercially available laser diffraction particle diameter measuring apparatus (for example, Mastersizer 3000 available from Malvern Panalytical Ltd.), and a difference in diffraction pattern according to the particle size may be measured when the particles pass through a laser beam, thereby calculating a particle diameter distribution. In this case, $D_{B50}$ may be measured by calculating a particle diameter at a point of 50% of the cumulative distribution of the number of particles according to the particle diameter in the measuring apparatus.

Specifically, $D_{A50}$ measured by the two-dimensional perspective may represent a diameter after an area of a carbon-based material particle is replaced with a circle, and $D_{B50}$ measured by the laser diffraction method may represent a diameter after an area of a carbon-based material particle is replaced with a sphere.

The carbon-based material of the negative electrode active material according to an exemplary embodiment of the present disclosure may be crystalline carbon, amorphous carbon, a carbon composite, or carbon fibers.

Examples of the amorphous carbon include hard carbon, soft carbon, coke, a mesocarbon microbead (MCMB), and a mesophase pitch-based carbon fiber (MPCF).

Examples of the crystalline carbon include graphite-based carbons such as natural graphite, artificial graphite, graphitized coke, a graphitized MCMB, and a graphitized MPCF.

Specifically, the carbon-based material of the negative electrode active material according to an exemplary embodiment of the present disclosure may be artificial graphite or natural graphite.

The carbon-based material of the negative electrode active material according to an exemplary embodiment of the present disclosure may be coated with pitch carbon, soft carbon, hard carbon, heavy oil, phenols, mesophase pitch carbide, calcined coke, carbon fibers, or a mixture thereof, and specifically, may be coated with pitch carbon, hard carbon, heavy oil, or phenols. Accordingly, a surface of the carbon-based material particle becomes more hydrophobic, such that the viscosity of the slurry may be appropriately controlled in the manufacture of the negative electrode, and the negative electrode coating quality may be further improved.

The silicon-based material according to an exemplary embodiment of the present disclosure may be selected from the group consisting of Si, $SiO_x$ ($0 < x < 2$), metal-doped $SiO_x$ ($0 < x < 2$), and a silicon-carbon composite. The metal may include lithium and/or magnesium, and the metal-doped $SiO_x$ ($0 < x < 2$) may include a metal silicate. Specifically, in the silicon-based material $SiO_x$, a range of x may be $0.2 < x < 1.8$, and more specifically, may be $0.5 < x < 1.5$.

In the negative electrode active material according to an exemplary embodiment of the present disclosure, the silicon-based material may be included in an amount of 0.5 to 30 parts by weight, specifically, 0.5 to 15 parts by weight or 0.5 to 9 parts by weight, and more specifically, 0.5 to 5 parts by weight, with respect to 100 parts by weight of the carbon-based material.

The present disclosure provides a method of manufacturing a negative electrode, the method including a coating process of depositing a negative electrode active material slurry including the negative electrode active material according to an exemplary embodiment of the present disclosure and a conductive agent on a current collector, and then drying the negative electrode active material slurry.

The method of manufacturing a negative electrode may solve problems such as an increase in kinematic viscosity of the slurry and a decrease in the amount of solid content in the slurry that occur due to the simultaneous inclusion of the silicon-based active material and the conductive agent, and may prevent electrode fracture and a decrease in adhesive strength between active materials, such that a negative electrode having excellent lifespan characteristics and low-temperature performance may be manufactured.

The negative electrode active material slurry may be prepared by mixing the negative electrode active material according to an exemplary embodiment of the present disclosure and a conductive agent in a solvent. Specifically, non-limiting examples of the solvent include water, pure water, deionized water, distilled water, ethanol, isopropanol, methanol, acetone, n-propanol, and t-butanol.

Non-limiting examples of the current collector include a copper foil, a nickel foil, a stainless steel foil, a titanium foil, nickel foam, copper foam, and a polymer substrate coated with a conductive metal. The negative electrode current collector may have a thickness of, for example, 10 to 50 pm, but is not limited thereto.

The coating process may be performed by a method such as gravure coating, slot die coating, multi-layer simultaneous die coating, imprinting, doctor blade coating, dip coating, bar coating, or casting, but is not limited thereto.

The negative electrode active material slurry includes a conductive agent, such that the expansion problem of the silicon-based negative electrode material having high electrical resistance may be prevented. Specifically, the conductive agent is not particularly limited as long as it has conductivity without causing chemical changes in the battery, and for example, the conductive agent may include a carbon-based conductive agent such as graphite, carbon black, acetylene black, Ketjen black, graphene, a carbon nanotube, a vapor-grown carbon fiber (VGCF), or a carbon fiber and/or a metal-based conductive agent including a perovskite material such as tin, tin oxide, titanium oxide, $LaSrCoO_3$, or $LaSrMnO_3$, and specifically, may be carbon nanotubes.

In addition, the negative electrode active material slurry may further include a binder. The binder serves to attach the negative electrode active material particles well to each other and also to attach the negative electrode active material well to the current collector, representative examples of the binder include polyvinylidene fluoride (PVDF), a vinylidene fluoride-hexafluoropropylene copolymer (poly(vinylidene fluoride-co-hexafluoropropylene)), carboxymethyl cellulose (CMC), polyacrylonitrile, polymethylmethacrylate, acrylonitrile butadiene rubber (NBR), polybutadiene rubber (BR), and styrene butadiene rubber (SBR), and specifically, the binder may be carboxymethyl cellulose (CMC), styrene butadiene rubber (SBR), or a mixture thereof.

In the method of manufacturing a negative electrode according to an exemplary embodiment of the present disclosure, a viscosity of the negative electrode active material slurry may be 2,000 to 10,000 cP, specifically, 3,000 to 8,000 cP, more specifically 4,000 to 6,500cP, and more specifically, 4,000 to 6,000 cP. When the viscosity of the slurry exceeds 6,500 cP, the solid content in the slurry is not sufficiently dispersed, causing non-uniform formation of the slurry, and an excessive die pressure is required during electrode coating, causing a reduction in productivity of the process, and when the viscosity of the slurry is lower than the value described above, a non-uniform coating layer may be formed.

In the method of manufacturing a negative electrode according to an exemplary embodiment of the present disclosure, the amount of solid content in the negative electrode active material slurry may be 10 to 70 parts by weight, specifically, 20 to 65 parts by weight, and more specifically, 30 to 60 parts by weight, with respect to 100 parts by weight of a total weight of the negative electrode active material slurry. In the present disclosure, the solid content refers to a solute or solid in a solution and may refer to a material such as a negative electrode active material or a conductive agent.

In the coating process of the method of manufacturing a negative electrode according to an exemplary embodiment of the present disclosure, a die pressure may be 0.05 to 20 psi, specifically, 0.1 to 15 psi, and more specifically, 0.1 to 10 psi. The viscosity of the slurry is controlled according to the method of manufacturing a negative electrode of the present disclosure, and an excessive die pressure is not required during electrode coating, and accordingly, the productivity may be excellent in the process.

The present disclosure provides a lithium ion battery including a positive electrode, the negative electrode according to an exemplary embodiment of the present disclosure, and a separator disposed between the positive electrode and the negative electrode.

The positive electrode may include a positive electrode current collector and a positive electrode mixture layer disposed on at least one surface of the positive electrode current collector.

The positive electrode current collector may include stainless steel, nickel, aluminum, titanium, or an alloy thereof. The positive electrode current collector may include aluminum or stainless steel surface-treated with carbon, nickel, titanium, or silver. The positive electrode current collector may have a thickness of, for example, 10 to 50 pm, but is not limited thereto.

The positive electrode mixture layer may include a positive electrode active material. The positive electrode active material may include a compound capable of reversibly intercalating and deintercalating lithium ions.

According to exemplary embodiments, the positive electrode active material may include lithium-nickel metal oxide. The lithium-nickel metal oxide may further include at least one of cobalt (Co), manganese (Mn), and aluminum (Al).

In some exemplary embodiments, the positive electrode active material or the lithium-nickel metal oxide may have a layered structure or crystal structure represented by the following Chemical Formula 1.

$$[\text{Chemical Formula 1}] \qquad Li_xNi_aM_bO_{2+z}$$

In Chemical Formula 1, $0.9 \leq x \leq 1.2$, $0.6 \leq a \leq 0.99$, $0.01 \leq b \leq 0.4$, and $-0.5 \leq z \leq 0.1$ may be satisfied. As described above, M may include Co, Mn, and/or Al.

The chemical structure represented by Chemical Formula 1 represents a bonding relationship included in the layered structure or crystal structure of the positive electrode active material and does not exclude other additional elements. For example, M may include Co and/or Mn, and Co and/or Mn may serve as a main active element of the positive electrode active material together with Ni. Chemical Formula 1 is provided to represent the bonding relationship of the main active elements and should be understood as a formula encompassing the introduction and substitution of additional elements.

In an exemplary embodiment, in addition to the main active elements, auxiliary elements may be further included to enhance the chemical stability of the positive electrode active material or the layered structure/crystal structure. The auxiliary elements may be incorporated together into the layered structure/crystal structure to form a bond, and in this case, it should be understood that the auxiliary elements are also included within the chemical structure range represented by Chemical Formula 1.

The auxiliary elements may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary elements may also act as auxiliary active elements contributing to the capacity/output activity of the positive electrode active material, for example, together with Co or Mn, like Al.

For example, the positive electrode active material or the lithium-nickel metal oxide may have a layered structure or crystal structure represented by the following Chemical Formula 1-1.

$$[\text{Chemical Formula 1-1}] \qquad Li_xNi_aM_{1b1}M_{2b2}O_{2+z}$$

In Chemical Formula 1-1, $M_1$ may include Co, Mn, and/or Al. $M_2$ may include the auxiliary elements described above. In Chemical Formula 1-1, $0.9 \leq x \leq 1.2$, $0.6 \leq a \leq 0.99$, $0.01 \leq b1 + b2 \leq 0.4$, and $-0.5 \leq z \leq 0.1$ may be satisfied.

The positive electrode active material may further include a coating element or a doping element. For example, an element substantially identical to or similar to the auxiliary elements described above may be used as the coating element or the doping element. For example, the elements described above may be used alone or in combination of two or more thereof as the coating element or the doping element.

The coating element or the doping element may be present on a surface of a lithium-nickel metal oxide particle, or may penetrate through the surface of the lithium-nickel metal oxide particle and may thus be included in the bonding structure represented by Chemical Formula 1 or Chemical Formula 1-1.

The positive electrode active material may include nickel-cobalt-manganese (NCM)-based lithium oxide. In this case, NCM-based lithium oxide having an increased content of nickel may be used.

Ni may be provided as a transition metal associated with the output and capacity of a lithium secondary battery. Therefore, as a high-Ni composition is employed in the positive electrode active material as described above, a high-capacity positive electrode and a high-capacity lithium secondary battery may be provided.

However, as the content of Ni increases, the long-term storage stability and lifespan stability of the positive electrode or the secondary battery may be relatively reduced, and side reactions with an electrolyte may also increase. However, according to exemplary embodiments, the lifespan stability and the capacity retention characteristics may be improved through Mn while maintaining the electrical conductivity by including Co.

The content of Ni in the NCM-based lithium oxide (for example, the mole fraction of nickel in the total moles of nickel, cobalt, and manganese) may be 0.6 or more, 0.7 or more, or 0.8 or more. In some exemplary embodiments, the content of Ni may be 0.8 to 0.95, 0.82 to 0.95, 0.83 to 0.95, 0.84 to 0.95, 0.85 to 0.95, or 0.88 to 0.95.

In some exemplary embodiments, the positive electrode active material may include a lithium cobalt oxide-based active material, a lithium manganese oxide-based active material, a lithium nickel oxide-based active material, or a lithium iron phosphate (LFP)-based active material (for example, $LiFePO_4$).

In some exemplary embodiments, the positive electrode active material may include, for example, a Mn-rich-based active material, a Li-rich layered oxide (LLO)/over lithiated oxide (OLO)-based active material, or a Co-less-based active material having a chemical structure or crystal structure represented by Chemical Formula 2.

$$[\text{Chemical Formula 2}] \qquad p[Li_2MnO_3] \cdot (1-p)[Li_qJO_2]$$

In Chemical Formula 2, $0 < p < 1$, $0.9 \leq q \leq 1.2$, and J may include at least one element of Mn, Ni, Co, Fe, Cr, V, Cu, Zn, Ti, Al, Mg, and B.

The separator may be configured to prevent an electrical short-circuit between the positive electrode and the negative electrode and to generate an ion flow. According to an exemplary embodiment, a thickness of the separator may be 10 $\mu$m to 20 $\mu$m, but the present disclosure is not limited thereto.

For example, the separator may include a porous polymer film or a porous non-woven fabric. The porous polymer film may include a polyolefin-based polymer such as an ethylene polymer, a propylene polymer, an ethylene/butene copolymer, an ethylene/hexene copolymer, or an ethylene/methacrylate copolymer. The porous non-woven fabric may include glass fibers, polyethylene terephthalate fibers, and the like having a high melting point. The separator may include a ceramic-based material. For example, inorganic particles may be coated on the polymer film or dispersed in the polymer film to improve heat resistance.

The separator may have a single-layer or multi-layer structure including the polymer film and/or non-woven fabric described above.

The lithium-ion battery may further include an electrolytic solution in which a lithium salt is dissolved, and according to exemplary embodiments, a non-aqueous electrolytic solution may be used as the electrolyte.

The non-aqueous electrolytic solution includes a lithium salt as an electrolyte and an organic solvent, the lithium salt is represented by, for example, $Li^+X^-$, and examples thereof include F-, Cl-, Br-, I-, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2 (CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN-, and $(CF_3CF_2SO_2)_2N^-$.

The organic solvent may include an organic compound that has sufficient solubility for the lithium salt and additive and does not have reactivity in the battery. The organic solvent may include, for example, at least one of a carbonate-based solvent, an ester-based solvent, an ether-based solvent, a ketone-based solvent, an alcohol-based solvent, and an aprotic solvent. As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethylsulfoxide, acetonitrile, diethoxyethane, sulfolane, gamma-butyrolactone, propylene sulfite, or the like may be used. These organic solvents may be used alone or in combination of two or more thereof.

The non-aqueous electrolytic solution may further include an additive. The additive may include, for example, a cyclic carbonate-based compound, a fluorine-substituted carbonate-based compound, a sultone-based compound, a cyclic sulfate-based compound, a cyclic sulfite-based compound, a phosphate-based compound, and a borate-based compound.

The cyclic carbonate-based compound may include vinylene carbonate (VC), vinyl ethylene carbonate (VEC), and the like.

The fluorine-substituted carbonate-based compound may include fluoroehtylene carbonate (FEC) and the like.

The sultone-based compound may include 1,3-propane sultone, 1,3-propene sultone, 1,4-butane sultone, and the like.

The cyclic sulfate-based compound may include 1,2-ethylene sulfate, 1,2-propylene sulfate, and the like.

The cyclic sulfite-based compound may include ethylene sulfite, butylene sulfite, and the like.

The phosphate-based compound may include lithium difluoro bis-oxalato phosphate, lithium difluoro phosphate, and the like.

The borate-based compound may include lithium bis(oxalate) borate and the like.

Hereinafter, examples of the present disclosure will be further described with reference to specific experimental examples. The examples and comparative examples included in the experimental examples are merely illustrative of the present disclosure and do not limit the scope of the accompanying claims, it is obvious to those skilled in the art that various modifications and alterations may be made without departing from the spirit and scope of the present disclosure, and it is obvious that these modifications and alterations are within the accompanying claims.

## $D_{A50}/D_{B50}$ Measurement Method

### 1. $D_{A50}$ Measurement Method (Two-Dimensional Perspective)

1) A graphite powder specimen was prepared and dried at 100°C for 12 hours or longer.
2) Using Camsizer-X2 available from Microtrac Retsch GmbH, the dried specimen was pressurized, dispersed, and dropped vertically.
3) Two-dimensional images of particles were measured in a horizontal direction using a high-resolution dynamic camera.
4) Using the built-in software for each measuring apparatus, the two-dimensional images were statistically processed, the diameters of the particles were distributed by weighting the volume, and the value of the 50th percentile was defined as $D_{A50}$.

### 2. $D_{B50}$ Measurement Method (Laser Diffraction Method)

1) A graphite powder specimen was prepared and dried at 100°C for 12 hours or longer.
2) The dried specimen was mixed with 1 g of an ethanol solution and dispersed by applying ultrasonic waves for 5 minutes.
3) The dispersed solution was introduced into a laser particle diameter measuring apparatus Mastersizer 3000 (Malvern Panalytical Ltd.) to measure a particle diameter distribution.
4) The diameters of the particles in the particle diameter distribution were distributed by weighting the volume, and the value of the 50th percentile was defined as $D_{B50}$.

### [Examples 1 to 10]

A negative electrode material slurry was prepared by mixing graphite (92.20%), $SiO_x$ (0 < x < 2) (5%), CNT (0.1% (added as a 0.4 wt% solution phase)), CMC (1.2%), and SBR (1.5%) having the characteristics shown in Table 1.

### Preparation of Secondary Particles

A mixture was prepared by mixing 100 g of an artificial graphite powder in the form of primary particles and pitch in a ratio of 90:10. Pitch having a softening point of 200 to 280°C, a carbonization yield of 50 to 80%, and a content of quinoline insoluble matter of less than 1% was used. The mixture was calcined at a temperature of 600°C for 10 hours to prepare secondary particles in which the primary particles were assembled. The secondary particles were sieved and classified using an air classifying mill to obtain graphite secondary particles satisfying the characteristics shown in Table 1.

### Graphite Coating

The coated graphite was calcined at 1,000°C using pitch as a coating agent to prepare particles coated with amorphous carbon. The coating was performed so that a content of the carbon coating satisfied 1 wt% of the total weight of the graphite-based active material.

**Manufacture of Lithium Secondary Battery**

The negative electrode active material slurry was applied onto one surface of a copper foil (current collector, thickness: 10 $\mu$m) to form a negative electrode active material layer, and a negative electrode including the same was manufactured. The loading amount of the negative electrode active material was 13 mg/cm$^2$ based on the cross-section, and the mixed density was 1.7 g/cc.

After interposing a PE separator between the manufactured negative electrode, lithium metal positive electrode, negative electrode, and positive electrode, an electrolytic solution containing 1 wt% FEC, 1.0 M LiPF$_6$, and a mixed solvent of EC:EMC:DEC = 25:45:30 was injected, thereby manufacturing a CR2016 coin cell. A half cell was manufactured by leaving the assembled coin cell at room temperature for 24 hours.

**[Comparative Examples 1 to 6]**

Lithium secondary batteries were manufactured in the same manner as that of the example, except that the characteristics of graphite included in the negative electrode active material were the values shown in Table 1.

[Table 1]

|  | Graphite type | Particles | $D_{A50}$ | $D_{B50}$ | $D_{A50}/D_{B50}$ |
|---|---|---|---|---|---|
| Example 1 | Artificial graphite | Primary particles | 8.2 | 7.9 | 1.04 |
| Example 2 | Artificial graphite | Primary particles | 10.0 | 11.1 | 0.90 |
| Example 3 | Artificial graphite | Secondary particles | 12.0 | 12.8 | 0.94 |
| Example 4 | Coated artificial graphite | Primary particles | 8.9 | 8.2 | 1.09 |
| Example 5 | Coated artificial graphite | Secondary particles | 12.1 | 12.5 | 0.97 |
| Example 6 | Coated artificial graphite | Secondary particles | 16.0 | 15.9 | 1.01 |
| Example 7 | Coated artificial graphite | Secondary particles | 15.1 | 15.7 | 0.96 |
| Example 8 | Natural graphite | - | 11.3 | 11.8 | 0.96 |
| Example 9 | Natural graphite | - | 10.8 | 11.6 | 0.93 |
| Example 10 | Natural graphite | - | 16.9 | 16.1 | 1.05 |
| Comparative Example 1 | Artificial graphite | Primary particles | 8.5 | 13.4 | 0.63 |
| Comparative Example 2 | Artificial graphite | Secondary particles | 14.5 | 16.9 | 0.86 |
| Comparative Example 3 | Coated artificial graphite | Primary particles | 12.9 | 10.8 | 1.19 |
| Comparative Example 4 | Coated artificial graphite | Secondary particles | 11.0 | 12.9 | 0.85 |
| Comparative Example 5 | Natural graphite | - | 13.0 | 11.1 | 1.17 |
| Comparative Example 6 | Natural graphite | - | 16.9 | 15.1 | 1.12 |

**<Evaluation Examples>**

**Evaluation 1. Evaluation of Slurry Viscosity**

The viscosity of the negative electrode material slurry was measured in the manufacturing process of each of the examples and the comparative examples. The results are shown in Table 2. The slurry viscosity was measured using an advanced Peltier temperature control system and Discovery HR-30 rheometer available from TA Instruments.

**Evaluation 2. Lifespan Characteristics at Room Temperature**

Lifespan characteristics of the lithium secondary batteries manufactured in the examples and the comparative examples were evaluated at room temperature (25°C) under C-rate conditions of 0.5 C charge/0.5 C discharge. Specifically, the lithium secondary batteries of the examples and the comparative examples were charged to 0.005 V at 0.5 C and discharged to 1.5 V at 0.5 C under constant current/constant voltage (CC/CV) conditions to measure a discharge capacity. According to the method of measuring the initial discharge capacity, charge and discharge were performed 500 times, a discharge capacity (C2) at the 500th time was measured, and a capacity retention rate was calculated by dividing the discharge capacity (C2) by the highest discharge capacity value (C1) among the initial 10 cycles. The results are shown in Table 2 (capacity retention rate (%) = C2/C1 X 100) .

**Evaluation 3. Lifespan Characteristics at Low Temperature**

The examples and the comparative examples were evaluated in the same manner as that of Evaluation 2, except that the temperature was changed to -10°C in the method of evaluating lifespan characteristics at room temperature. The results are shown in Table 2.

[Table 2]

|  | Slurry viscosity (cP) | Capacity retention rate at 25°C (%) | Capacity retention rate at -10°C (%) |
|---|---|---|---|
| Example 1 | 5988 | 85 | 81 |
| Example 2 | 5701 | 90 | 83 |
| Example 3 | 5619 | 93 | 83 |
| Example 4 | 5334 | 80 | 85 |
| Example 5 | 5444 | 89 | 87 |
| Example 6 | 5174 | 86 | 88 |
| Example 7 | 5316 | 84 | 88.1 |
| Example 8 | 5550 | 88 | 82 |
| Example 9 | 5413 | 84 | 83 |
| Example 10 | 5551 | 92 | 80 |
| Comparative Example 1 | 7081 | 79 | 68 |
| Comparative Example 2 | 6793 | 64 | 77 |
| Comparative Example 3 | 6800 | 75 | 71 |
| Comparative Example 4 | 6560 | 76 | 72 |
| Comparative Example 5 | 7474 | 69 | 65 |
| Comparative Example 6 | 7106 | 72 | 61 |

As shown in Table 2, in the examples in which the $D_{A50}/D_{B50}$ value was 0.9 or more and 1.1 or less, the minimum viscosity of the slurry was 5,174 cP and the maximum viscosity of the slurry was 5,988 cP, which showed an appropriate viscosity for forming a coating layer, compared to the comparative examples in which the $D_{A50}/D_{B50}$ value did not satisfy the above values. Meanwhile, in the comparative examples, the viscosity of the slurry exceeded 6,500 cP, and it was found that the viscosity of the slurry was excessively high.

Accordingly, when the capacity retention rates at room temperature and low temperature were confirmed, in the case of the examples, it was confirmed that the capacity retention rate was 80 to 93% at room temperature and the capacity retention rate did not decrease significantly even at a low temperature and was maintained at about 80% or higher. On the other hand, in the cases of the comparative examples, it was confirmed that both the capacity retention rate at room temperature and the capacity retention rate at a low temperature were about 60 to 70%, which were significantly lower than those of the examples.

Through this, it is considered that the carbon-based material of the present disclosure may not only improve the electrode coating quality by appropriately controlling the viscosity of the slurry, but also improve the capacity retention rate and lifespan characteristics of the battery.

As set forth above, the negative electrode active material according to an exemplary embodiment of the present disclosure may control the viscosity of the slurry in the process of manufacturing the negative electrode, such that excellent electrode coating quality may be implemented.

The negative electrode active material according to an exemplary embodiment of the present disclosure and the negative electrode including the same may have high-capacity characteristics depending on the content of silicon and may suppress electrical isolation and peeling phenomena caused by volume expansion of silicon.

The lithium secondary battery according to an exemplary embodiment of the present disclosure may implement excellent lifespan characteristics.

The content described above is merely an example of applying the principles of the present disclosure, and other configurations may be further included without departing from the scope of the present disclosure.

**Claims**

1. A negative electrode active material comprising a carbon-based material and a silicon-based material that satisfy the following Expression 1:

$$[\text{Expression 1}]$$

$$0.9 \leq D_{A50}/D_{B50} \leq 1.1$$

wherein $D_{A50}$ and $D_{B50}$ are 50th percentiles of a volume-weighted distribution of diameters of the carbon-based material measured by a two-dimensional perspective and a laser diffraction method, respectively.

2. The negative electrode active material of claim 1, wherein the carbon-based material is artificial graphite or natural graphite.

3. The negative electrode active material of any one of claims 1 or 2, wherein the carbon-based material is coated with pitch carbon, soft carbon, hard carbon, heavy oil, phenols, mesophase pitch carbide, calcined coke, carbon fibers, or a mixture thereof.

4. The negative electrode active material of any one of claims 1 to 3, wherein the silicon-based material is selected from the group consisting of Si, SiOx (0 < x < 2), metal-doped SiOx (0 < x < 2), and a silicon-carbon composite.

5. The negative electrode active material of any one of claims 1 to 4, wherein the silicon-based material is included in an amount of 0.5 to 30 parts by weight with respect to 100 parts by weight of the carbon-based material.

6. A method of manufacturing a negative electrode, the method comprising a coating process of depositing a negative electrode active material slurry including the negative electrode active material of any one of claims 1 to 5 and a conductive agent on a current collector, and then drying the negative electrode active material slurry.

7. The method of claim 6, wherein the conductive agent is carbon nanotubes.

8. The method of any one of claims 6 to 7, wherein a viscosity of the negative electrode active material slurry is 2,000 to 10,000 cP.

9. The method of any one of claims 6 to 8, wherein the amount of solid content in the negative electrode active material slurry is 10 to 70 parts by weight with respect to 100 parts by weight of a total weight of the negative electrode active material slurry.

10. The method of any one of claims 6 to 9, wherein a die pressure in the coating process is 0.05 to 20 psi.

11. The method of any one of claims 6 to 10, wherein the negative electrode active material slurry further includes carboxymethyl cellulose (CMC), styrene butadiene rubber (SBR), or a mixture thereof.

12. A lithium secondary battery comprising:

a positive electrode;
a negative electrode manufactured by the method of manufacturing a negative electrode of any one of claims 6 to 11; and
a separator disposed between the positive electrode and the negative electrode.

Europäisches Patentamt
European Patent Office
Office européen des brevets

## EUROPEAN SEARCH REPORT

**Application Number**

EP 24 21 9248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | No 111: "A NATIONAL MEASUREMENT GOOD PRACTICE GUIDE A NATIONAL MEASUREMENT GOOD PRACTICE GUIDE", , 1 June 2009 (2009-06-01), XP055099372, Retrieved from the Internet: URL:http://publications.npl.co.uk/npl_web/pdf/mgpg111.pdf [retrieved on 2014-01-30] * figures 4.11, 5.1(a), 5.1(b) * | 1-12 | INV. H01M4/587 H01M4/04 H01M4/133 H01M4/134 H01M4/1393 H01M4/1395 H01M4/36 H01M4/38 H01M4/62 |
| A | Richard N Kelly ET AL: "WHAT IS WRONG WITH LASER DIFFRACTION? A Critical Review of Current Laser Diffraction Methods for Particle Size Analysis", Recent Criticism of Laser Diffraction as a PSA Technique, 1 January 2015 (2015-01-01), pages 1-7, XP055240725, Retrieved from the Internet: URL:http://www.donner-tech.com/whats_wrong_with_ld.pdf [retrieved on 2016-01-13] * Page 3, right column, item "Numeric algorithms and software" * | 1-12 | |

| | | | TECHNICAL FIELDS SEARCHED (IPC) |
|---|---|---|---|
| | | | H01M |

The present search report has been drawn up for all claims

| Place of search | Date of completion of the search | Examiner |
|---|---|---|
| Munich | 9 May 2025 | González Junquera, J |

EPO FORM 1503 03.82 (P04C01)

**EP 4 571 887 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230181329